# EUROPÄISCHE PATENTSCHRIFT

(11) **EP 2 572 573 B1**
(45) Veröffentlichungstag und Bekanntmachung des Hinweises auf die Patenterteilung: **27.11.2013**
(21) Anmeldenummer: 12197492.7
(22) Anmeldetag: 18.12.2009
(51) Int. Cl.: A01J 25/00, A01J 25/11, A23C 19/00, A01J 27/00

(54) **Verwendung eines Filters zum Einsatz in der Lebensmittelverarbeitung sowie Lebensmittelverarbeitungsverfahren**
Filter for use in food processing
Filtre destiné à être utilisé dans le traitement des produits alimentaires

(30) Priorität: 19.12.2008 DE 102008063972
(43) Veröffentlichungstag der Anmeldung: 27.03.2013
(62) Teilanmeldung aus: 09795983.7
(73) Patentinhaber: Hochland SE, 88178 Heimenkirch (DE)
(72) Erfinder: Prinz, Artur, 88178 Heimenkirch (DE); Knapp, Florian, 88167 Röthenbach (DE)
(74) Vertreter: Wagner, Kilian

(56) Entgegenhaltungen:
- AU-B2- 744 993
- FR-A1- 2 747 266
- US-A- 3 691 633

## Beschreibung

Die vorliegende Erfindung betrifft die Verwendung eines Filters zur Verarbeitung pumpfähiger pastöser Lebensmittel, insbesondere zum Einsatz in der Schmelzkäseherstellung, aufweisend ein geschlossenes Gehäuse mit einem Zulauf für das zu filtrierende Produkt, insbesondere Schmelzkäse, einen Ablauf für das filtrierte Produkt, einen Ausgang für den abgefilterten Rückstand und einen zwischen Zulauf und Ablauf angeordneten Filtereinsatz mit einer zylindrischen Filterwand, die in radialer Richtung von Innen ("Primärseite") nach Außen ("Sekundärseite") von dem Lebensmittel-Produkt durchströmt wird. Die Erfindung betrifft auch ein Verfahren zur Verarbeitung pumpfähiger pastöser Lebensmittel, insbesondere Schmelzkäse unter Einsatz eines solchen Filters.

Bekannte Filter zur Verarbeitung pastöser Lebensmittel, insbesondere Schmelzkäse können an unterschiedlichen Stellen im Verarbeitungsprozess eingesetzt werden. Zum einen dienen sie als im Prozess kontinuierlich durchflossener "in-line" Filter dazu, das fließende Produkt zu filtern, um eventuelle Verunreinigungen vor der Weiterverarbeitung zu entfernen. Zum anderen werden derartige Filter als "Rework"-Filter betrieben, die Bestandteile, insbesondere veränderte Produktablagerungen oder Zutaten, aus nicht verarbeitetem Produkt entfernen, um das solchermaßen gereinigte Produkt einer Wiederverwendung zuzuführen.

Für diese Trennaufgaben werden üblicherweise Filter verwendet, deren Maschenweiten so bemessen sind, dass das viskose Produkt, insbesondere der erhitzte Schmelzkäse, durch den Filter hindurchtreten kann, während die Schmutzfracht als Rückstand zurückgehalten wird. Dabei sind Systeme bekannt, bei denen die Schmutzfracht aufgrund der Schwerkraft nach unten sinkt und ausgeschleust wird. Bei diesem Ausschleusvorgang wird allerdings mit dem Rückstand auch ein recht großer Anteil von gutem Produkt ausgeschleust. Ein weiteres Problem liegt darin, dass sich an den Wandungen des Filters und dem Gehäuse angebrannte Reste festsetzen, die zu Produktänderungen, z.B. Verfärbungen führen.

Bekanntermaßen sind Lebensmittel, wie z.B. Schmelzkäse, wegen ihrer hohen Viskosität ein bezüglich der Filterung besonders sensibles Produkt. Hinzu kommt die hohe Verarbeitungstemperatur zwischen 50°C und 90°C, bei der es leicht zu dem oben genannten Anhaften und zu Produktänderungen, wie z.B. Farb- oder Geschmacksänderungen wegen Denaturierung kommen kann. Vor allem wegen des schnellen Zusetzens haben bekannte Filtersysteme eine geringe Standzeit. Danach müssen die Filter gewechselt oder zwischengereinigt werden, wobei die Zwischenreinigung durch ein Rückspülen mittels einer geeigneten Spülflüssigkeit erfolgt. Während des Rückspulens und des Ausbaus ist der Filter nicht in Betrieb, so dass nachfolgend das gesamte System wieder angefahren werden muss.

Die FR 2 747 266 offenbart eine Vorrichtung für die Produktion von Schmelzkäse. Diese umfasst einen länglichen Filter, der dazu geeignet ist, die wässrigen Bestandteile bei der Käsezubereitung abzutrennen.

Die AU 744 993 B2 offenbart eine Lebensmittel-Mischmaschine. Innerhalb eines Gehäuses sind mehrere Förderbänder zum Fördern des Lebensmittels angeordnet. Entlang den Förderbändern sind Mischeinrichtungen vorgesehen, die das Lebensmittelmaterial vermischen, ohne es zu beschädigen.

Die US 3 691 633 A offenbart eine Vorrichtung zum Entmolken von Käsebruch. Um für das Ausgangsprodukt einen niedrigen Feuchtigkeitsgehalt zu erzielen weist die Vorrichtung ein Pressplattenpaar und mehrere dazwischen befindliche Filtersäcke auf.

Aufgabe der vorliegenden Erfindung ist es eine Verwendung eins weitergebildeten Filters zur Verarbeitung pumpfähiger pastöser Lebensmittel anzugeben, so dass bei hohen Standzeiten, bei hohem Durchsatz und bei großer Filterwirkung Rückstände aus dem kontinuierlich zu verarbeitenden Lebensmittel-Produkt effektiv und mit möglichst wenig Verlust ausgeschleust werden können, wobei die Bildung von Produktänderungen weitgehend vermieden wird. Ferner soll ein Verarbeitungsverfahren für pumpfähige, pastöse Lebensmittel angegeben werden, womit bei hohen Standzeiten, bei hohem Durchsatz und bei großer Filterwirkung Rückstände aus dem kontinuierlich zu verarbeiten Lebensmittel-Produkt effektiv und mit möglichst wenig Verlust ausgeschleust werden können, wobei die Bildung von Produktänderungen weitgehend vermieden wird.

Erfindungsgemäß wird diese Aufgabe durch einen Filter mit den Merkmalen des Anspruchs 1 gelöst. Verfahrensgemäß wird die Aufgabe mit den Merkmalen des Anspruchs 9 gelöst. Merkmale besonderer Ausführungsformen sind in den Unteransprüchen genannt.

Ein wesentliches Merkmal der Erfindung liegt in der besonderen Ausbildung des Kernelementes des verwendeten Filters, das innerhalb des Filtereinsatzes koaxial angeordnet und drehbar gelagert ist, wobei es vorteilhafterweise vermittels eines Antriebes angetrieben wird. Dabei richtet sich die Gestaltung des Kernelementes nach den Anforderungen an den Ringraum, der sich zwischen dem Kernelement und der das Kernelement umgebenden Filterwand ausbildet. Dieser definierte Ringraum muss besonderen Anforderungen genügen, die sich aus den Besonderheiten des zu filternden Produktes ergeben. Zum einen muss der entstehende Ringraum einen konstant homogenen Fluss des Produktes ermöglichen, so dass sich keine Zonen bilden können, in denen sich Produkt sammeln und denaturieren kann. Zum anderen ist es im Hinblick auf das sensible Produkt wichtig, dass es beim Durchströmen des Filters zu einem kontrollierbaren und möglichst homogenen Druckgradienten kommt, der einen bestimmten Wert zwischen 4 bar und 8 bar nicht übersteigt.

Ein weiterer erfindungswesentlicher Gedanke ist, dass am Außenumfang des Kernelementes des verwendeten Filters ein Schaber insbesondere mit mehreren separaten Schaberlamellen angeordnet ist, der bei sich drehendem Kernelement das Produkt schonend von der Innenfläche der Filterwand schabt, um den sich an dieser Primärseite absetzenden Rückstand abzulösen und zum Ausgang zu befördern. Dabei ist es auch ein wesentlicher Gesichtspunkt, dass der erfindungsgemäße Schaber so konzipiert ist, dass er den homogenen Fluss des Produktes nicht behindert. Dazu ist er vorteilhafterweise nicht ähnlich einer Förderschnecke mit einem kontinuierlichen, das Kernelement in einer Spirale umgebenden Schaberelement ausgestattet, sondern weist große den freien Durchfluss gewährleistende Unterbrechungen auf. Zudem wird die Drehgeschwindigkeit so angepasst, dass es am Schaberelement zu möglichst geringen Druckschwankungen im Fluss des Produktes kommt.

Der erfindungsgemäß zum Einsatz kommende Filter weist dabei ein geschlossenes Gehäuse mit einem Zulauf für das zu filtrierende Produkt, mit einem Ablauf für das filtrierte Produkt und mit einem Ausgang für den abgefilterten Rückstand auf. Die Filterfunktion wird von dem zylindrischen Filtereinsatz übernommen. Erfindungsgemäß ist in den Filtereinsatz das Kernelement derart eingesetzt, dass zwischen Kernelement und Filtereinsatz der definierte Ringraum ausgebildet ist, der bei dem zu verarbeitenden Produkt trotz unterschiedlichen Viskositäten eine hohe und homogene Fließgeschwindigkeit gewährleistet. Im Falle des zu verarbeitenden Schmelzkäses hat dieser eine Temperatur zwischen etwa 50°C und 90°C und eine entsprechende Viskosität. Diese liegt in diesem Temperaturbereich etwa zwischen 0,25 - 5,0 Pa*s, wobei statt der Einheit Pa*s auch die Einheit cP ("centipoise") verwendet wird. Dabei kann die Viskosität des Schmelzkäses in vielen Fällen mit einem Rotationsviskosimeter mit einem zylindrischen Messsystem entsprechend DIN 53018/53019 gemessen werden.

Aufgrund der hohen Fließgeschwindigkeit wird die Schmutzfracht sicher in Richtung des Ausschleusventils am Ausgang transportiert. Wie schon dargestellt, ist der Ringraum dabei so ausgebildet, dass keine strömungsberuhigten Zonen entstehen und Produktänderungen vermieden werden können. Bei der Fließgeschwindigkeit, die zu einem Durchsatz von mehr als 500 Kilogramm und bis zu 4 Tonnen pro Stunde führen kann, wird ein gutes Trennergebnis erreicht, so dass sich nahe des Ablaufs für den abgefilterten Rückstand der Rückstand in hoher Konzentration ansammelt. Hierdurch können die Verluste an gutem Produkt beim Abschlämmen, das heißt beim Auslassen des abgefilterten Rückstands aus dem Ablauf, wesentlich reduziert werden.

Ein ganz wesentlicher Aspekt der Erfindung liegt in der Gestaltung und insbesondere in der Herstellung des Filtereinsatzes und insbesondere der aktiven Filterwand des verwendeten Filters. Diese kann je nach Produkt und Einsatzgebiet Filteröffnungen mit einer Maschenweite zwischen 10 und 400 Mikrometern aufweisen. Ein besonderer Gesichtspunkt ist dabei die von den Öffnungen gebildete Gesamtfläche, die zu einem homogenen Fluss des Produktes durch den Filter beiträgt. Diesbezüglich hat es sich als besonders vorteilhaft erwiesen, wenn die von den Öffnungen gebildete Gesamtfläche der 1 ,5 fachen bis 2,5 fachen, insbesondere etwa der doppelten, Querschnittsfläche des Zulaufs entspricht. Solcherart ausgebildete Filtereinsätze zeichnen sich durch einen gleichmäßigen Durchtritt des Produktes durch alle zur Verfügung stehenden Öffnungen und damit durch eine gute Siebwirkung aus.

Ein besonders wesentlicher Erfindungsgedanke liegt in der nahtlosen Filterwand des verwendeten Filters. So wurden solche Filter bislang immer von einem zum Zylinder gebogenen Lochblech oder einem Geflecht gebildet. Ein solcher Zylinder hat jedoch immer einen erhabenen Stoß, an dem die Kanten aufeinander treffen. Dieser Stoß steht einem sauberen Absteifen der Innenfläche offensichtlich entgegen und trägt zu einem großen Verschleiß der Schaber bei. Erfindungsgemäß wird die Innenfläche der Filterwand mit einem spanabhebenden Verfahren bearbeitet, insbesondere wird die zylindrische Filterwand aus einem Vollmaterial, beispielsweise einem dickwandigen Zylinder, ausgedreht. Die Bearbeitung der äußeren Filterfläche geschieht vorteilhafterweise auf dieselbe Art. Das die Filterfläche ausbildende Sieb kann dann eine Stärke von weniger als einem Millimeter, insbesondere zwischen 0,5 mm und 1 ,5 mm, aufweisen. Eine solche durch Aus- oder Abdrehen bearbeitete Fläche ist besonders glatt und kann problemlos mit Schabern gereinigt werden.

Die Öffnungen werden nachträglich durch einen Bohrprozess, insbesondere durch einen mechanischen Bohrer oder durch einen Laserstrahl, in die Filterwand eingebracht. Dabei kann mit einem Laserstrahl eine höhere Lochdichte erzielt werden. Dabei ist es vorteilhaft, wenn die Bohrungen definierte Strömungskanäle bilden, die in Fließrichtung des Produktes konisch erweitert sind.

Um den Filtereinsatz im Bereich der Filterfläche zu verstärken, ist es vorteilhaft, wenn der Außenumfang von beabstandeten Stützringen umgeben ist. Diese können beim Herstellungsprozess aus dem Vollmaterial entstehen. Es kann auch vorteilhaft sein, die Stützringe nachträglich durch Schweißen oder Loten anzubringen.

Das vorzugsweise aus Kunststoff bestehende Kernelement im Inneren des zylindrischen Filtereinsatzes kann mit dem Antrieb in Rotationsbewegung versetzt werden. Dieser ist vorzugsweise so ausgebildet, dass das Kernelement mit einer Drehzahl zwischen 1 U/min und 30 U/min vor- und rückwärts, intermittierend angetrieben wird, wobei die Drehzahl in Abhängigkeit einer Druckdifferenz, insbesondere der Druckdifferenz zwischen Zulauf und Ablauf, einstellbar ist oder sich selber regelt. Je hoher der Differenzdruck, desto größer die Rotationsgeschwindigkeit.

In einer vorteilhaften Ausgestaltung der Erfindung sind an dem drehbaren Kernelement des verwendeten Filters, das vorzugsweise von einem aus Kunststoff gefertigten Zylinder beispielsweise in Form eines Tunnels, eines Fasses oder eines Kegels gebildet wird, Schaberlamellen angeordnet, die mit einer schabenden Außenkante entlang der Innenwand des Filtereinsatzes schaben. Aufgrund des Abschabens der Filteroberfläche wird ein niedriger Differenzdruck beim Durchgang durch den Filter erreicht. Dadurch, dass die Filteroberfläche kontinuierlich gereinigt wird, entstehen lediglich geringe Differenzdruckschwankungen, so dass ein besonders guter Transport des Produktes entlang der inneren Filteroberfläche gewährleistet ist. Die einzelnen Schaberlamellen sind versetzt zueinander so angeordnet, dass bei Rotation die gesamte Innenwand des Filtereinsatzes überstrichen wird.

In einer besonderen Ausführungsform sind die Schaberlamellen in einem Winkel gegen die Umfangsrichtung in der Wandung gehalten, so dass sie sich bei Rotation im Fluss des Produktes bewegen. Die Lagerung der Schaberlamellen in dem Kernelement aus Kunststoff, insbesondere PVDF, kann schwimmend sein, so dass sich die Schaberlamellen ein wenig entlang ihrer Achse bewegen können. Bei der Materialpaarung ist darauf zu achten, dass diese ein Gleiten unterstützt. Diese schwimmende Halterung wird vorzugsweise dadurch realisiert, dass die aus flachem Kunststoff gefertigte Schaberlamelle mindestens eine konvexe Krümmung aufweist, mit der sie derart in einen entsprechend konkaven Schlitz eingesteckt ist, dass sie um ein Stückchen in dem Schlitz hin und her rutschen kann. Die andere Kante ("Schaberkante") der Schaberlamelle weist ebenfalls eine konvexe Krümmung auf, die der Krümmung der Innenfläche der Filterwand unter Berücksichtigung des winkeligen Einbaus der Schaberlamelle angepasst ist. Idealerweise sind beide konvexen Krümmungen identisch, so dass ein einfacher Einbau sichergestellt ist. Durch die schwimmende Halterung legen sich die Schaberkanten optimal an die Innenfläche der Filterwand an.

In einer bevorzugten Ausführungsform ist in dem Kernelement ein zentraler Spülkanal zur Durchführung von Spülflüssigkeit vorgesehen. Dieser hat abzweigende Ausflusskanäle, die jeweils in einem Schlitz münden, in dem eine Schaberlamelle eingesteckt ist. Die Schaberlamelle wird quasi von hinten angeströmt. Um den Querschnitt der Ausflusskanäle und damit die Spülleistung zu erhöhen, ist es vorteilhaft, wenn die Ausflusskanäle einen rechteckigen Querschnitt haben, dessen Breite der Breite des Schlitzes entspricht. Die Ausflusskanäle können in Flussrichtung konisch erweitert sein. Zum Reinigen rotiert das Kernelement ein Stück zurück und wieder vor, während die Spülflüssigkeit durch die Ausflusskanäle in den Ringraum strömt. Auf diese Weise wird die gleichzeitig abgeschabte Primärseite der Filterwand effektiv von Verunreinigungen befreit. Vorzugsweise ist eine Steuerung vorhanden, über die der Rückspülvorgang über eine vorbestimmte Zeit durchführbar ist. Mit den Ausflusskanälen wird ein Zuwachsen des Ringraumes und der Lammelenschaber vermieden.

Schließlich ist am Ablauf für den abgefilterten Rückstand vorzugsweise ein steuerbares Verschlusselement angeordnet, durch das bei entsprechender Steuerung der abzufilternde Rückstand gezielt ausgeschoben werden kann.

Weitere Merkmale, Einzelheiten und Vorteile der Erfindung ergeben sich aus den in der Zeichnung dargestellten Ausführungsbeispielen. Es zeigen:
- Figur 1:: eine Schnittdarstellung des erfindungsgemäßen Filters und
- Figur 2:: eine Schnittdarstellung mit angedeuteten Schaberlamellen.

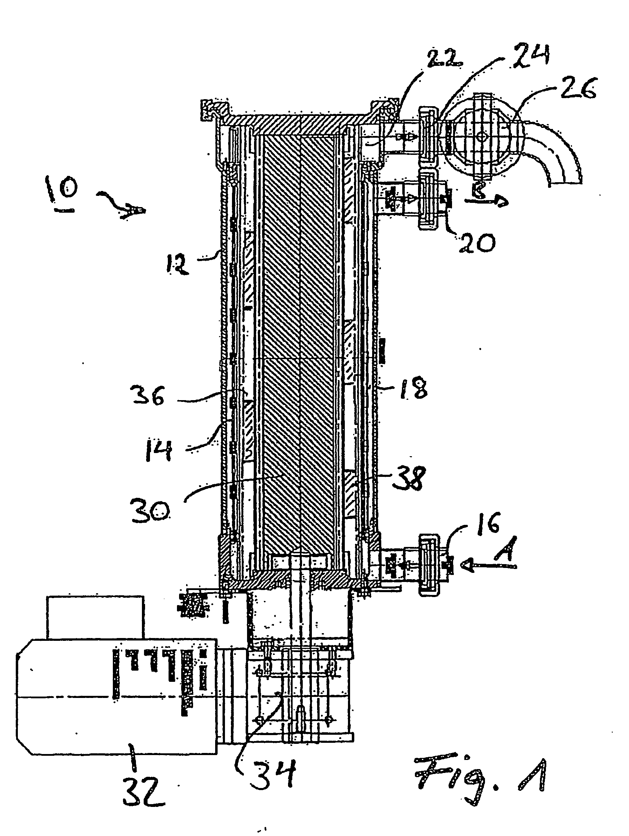

In Figur 1 ist ein Längsschnitt durch einen Filter 10 gezeigt, der sich insbesondere in der Schmelzkäseherstellung einsetzen lässt und der in einem geschlossenen Gehäuse 12 einen herausnehmbaren Filtereinsatz 14 aufweist. In das Gehäuse 12 führt ein Zulauf 16 (Pfeil A), über welchen in hier nicht näher dargestellter Art und Weise das hochviskose Produkt über eine Rohrleitung zugeführt wird.

Das Produkt wird in das Innere des Filters 10 geführt und durchtritt die mit Öffnungen versehene Filterwand des zylindrischen Filtereinsatzes 14 von innen nach außen in radialer Richtung. Außen ist zwischen dem Filtereinsatz 14 und dem geschlossenen Gehäuse 12 ein Mantelraum 18 vorgesehen, durch den das gefilterte Produkt durch die Druckdifferenz in Richtung eines Ablaufs 20 nach oben gefördert wird. An den Ablauf 20 schließt eine hier nicht näher dargestellte Rohrleitung an, über die das gefilterte Produkt zur Weiterverarbeitung zugeführt wird (Pfeil B). Abgefilterter Rückstand in Form von Ablagerungen und Fremdkörpern werden aufgrund der geringen Spalt- oder Maschenweite in der Filterwand des Filtereinsatzes mechanisch zurückgehalten und gelangen nicht in den Mantelraum 18. Dieser Rückstand wird mittels Schaberlamellen 38 nach oben in Richtung eines Sammelbereichs 22 gefördert. Über einen entsprechenden Ausgang 24 wird der angesammelte Rückstand durch Öffnen eines Steuerelements 26, das zu definierten Zeitpunkten abgeleitet wird.

Im Filtereinsatz 14 ist ein drehbares aus Kunststoff gefertigtes Kernelement 30 koaxial angeordnet, das über einen Motor 32 und ein Getriebe 34 in Drehung versetzbar ist. Zwischen dem rotierenden Kernelement 30 und dem Filtereinsatz 14 ist ein definierter Ringraum 36 ausgebildet. Am rotierenden Kernelement 30 sind die Schaberlamellen 38 aus Kunststoff gehalten, die so bemessen sind, dass sie den gesamten Ringraum 36 überbücken an der Filterwand anliegen. Bei drehendem Kernelement zum 30 schaben die Schaberlamellen 38 den Rückstand an der Innenfläche der Filterwand ab und führen ihn zum Sammelbereich 22. Das Kernelement 30 ist so dimensioniert, dass der entstehende Ringraum 36 einen konstanten Fluss des Produktes ermöglicht.

Das Kernelement 30 kann nun mit seinen Schaberlamellen 38 einen definierten Anpressdruck auf die Primärseite des Filterelementes 14 ausüben. Die Drehzahl und Drehrichtung des Kernelementes 30 ist über die hier nicht näher dargestellte Steuerung variabel einstellbar und stellt sich je nach Produktionsbedingungen, insbesondere bei steigender Druckdifferenz zwischen Eingang 16 und Ausgang 20 automatisch über ein geeignetes Programm ein.

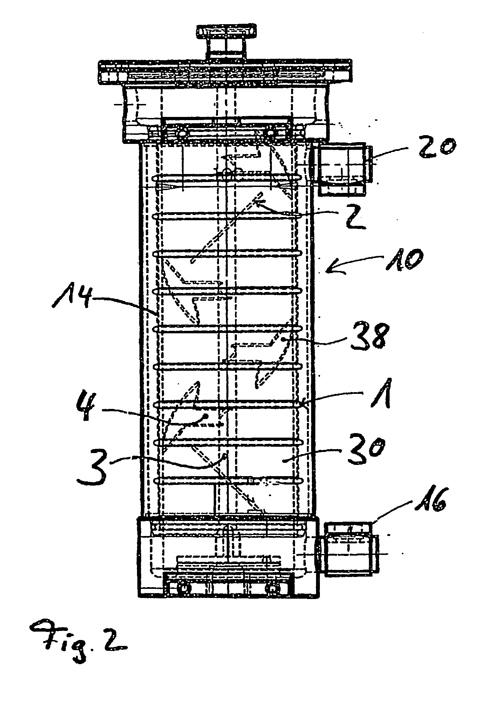

In Figur 2 ist ein Filter 10 mit eingebautem Filtereinsatz 14 dargestellt, der auch liegend betreibbar ist. Zur erkennen ist, dass die dünne Filterwand von den Umfang umfassenden Stutzringen 1 stabilisiert wird. Der Filtereinsatz 14 ist aus einem Stück gedreht und nachträglich mit den Öffnungen versehen. Aus Figur 2 ist zu entnehmen, dass das Kernelement 30 ein massiver aus Kunststoff gefertigter Zylinder ist, in dessen Wandung Schlitze 2 in einem Winkel zur Umfangsrichtung von etwa 45° eingebracht sind. In den Schlitzen 2 sind die Schaberlamellen 38, die mit ihrer schabenden Außenkante die Innenwand des Filtereinsatzes 14 beaufschlagen, schwimmend eingesteckt. Die Schaberlamellen 38 sind so gebildet, dass sie in dem jeweiligen Schlitz 2 hin und her bewegen können.

In dem Kernelement 30 ist ein Spülkanal 3 zur Durchführung von Spülflüssigkeit vorgesehen. Von dem Spülkanal 3 zweigen in radialer Richtung Ausflusskanäle 4 ab, die jeweils in einem Schlitz 2 münden. Die Ausflusskanäle 4 haben einen rechteckigen Querschnitt, der in seiner Breite der Breite des Schlitzes 2 entspricht. In einer Reinigungsphase wird der Produktfluss durch den Filter gestoppt und Spülflüssigkeit über die Kanäle in die Schlitze eingebracht. Unter einer Hin- und Herbewegung des Kernelementes 30 werden die schwimmend eingesteckten Schaberlamellen gelöst und die Filterwand durch Abschaben gereinigt. Die anfallende mit Rückständen belastete Spülflüssigkeit wird über einen nicht dargestellten Abfluss abgeführt.

Zusammengefasst wird das Produkt in der Produktionsphase von der Schmelzmaschine über eine Rohrleitung zum Filter gepumpt und fließt über den Einlaufstutzen in das Gehäuse. Das Produkt fließt in Ringraum zwischen Schaberkern und Filterelement (Primärseite) und durchströmt das Filterelement von der Primärseite zum Mantelraum ("Sekundärseite").

Dabei werden Ablagerungen und Fremdkörper durch das Filterelement auf der Primärseite zurückgehalten. Das gefilterte Produkt wird durch den Auslaufstutzen rausgebracht.

Für das Abschlämmen des Filterelementes wird das Steuerelement zu einem definierten Zeitpunkten geöffnet. Das mit Rückständen stark belastete Produkt strömt aufgrund der Druckdifferenz zwischen Primärseite und Atmosphäre über den Abschlammstutzen raus.

Mit dem beschriebenen Filter und der Möglichkeit der Reinigung im Betrieb kann zum einen der Verlust von "gutem" Produkt beim Abschlämmen minimiert werden. Die Standzeiten während der Produktion können durch die Möglichkeit der Reinigung wesentlich erhöht werden, wobei große Standzeiten in der Produktion verwirklicht werden können, bevor das Filterelement 14 nach Ausbau einer externen Reinigung zugeführt werden muss.

## Patentansprüche

1. Verwendung eines Filters zur Verarbeitung pastöser Lebensmittel, insbesondere zur Schmelzkäseherstellung, wobei der Filter ein geschlossenes Gehäuse (12) mit einem Zulauf (16) für zu filtrierende Lebensmittel-Produkte, einen Ablauf (20) für das filtrierte Lebensmittel-Produkt, einen Ausgang für den abgefilterten Rückstand und einen zwischen Zulauf (16) und Ablauf (20) angeordneten Filtereinsatz (14) mit zylindrischer Filterwand, die in radialer Richtung von Innen nach Außen von dem Lebensmittel-Produkt durchströmt wird, aufweist, wobei der Filter **dadurch gekennzeichnet ist, dass** ein drehbares Kernelement (30) im Filtereinsatz (14) koaxial angeordnet ist, wobei zwischen dem Kernelement (14) und der Filterwand ein definierter Ringraum (36) ausgebildet ist, wobei das Kernelement (30) so dimensioniert ist, dass der entstehende Ringraum (36) einen konstanten Fluss des Lebensmittel-Produktes ermöglicht, wobei am Außenumfang des Kernelementes (30) mindestens ein Schaber (38) angeordnet ist, der bei drehendem Kernelement (30) zum Abführen des Rückstandes an der Innenfläche der Filterwand schabt.

2. Verwendung nach Anspruch 1,
**dadurch gekennzeichnet, dass** der Filtereinsatz (14) Öffnungen mit einer Maschenweite zwischen 10 und 400 Mikrometern aufweist, wobei die von den Öffnungen gebildete Gesamtfläche dem 1,5 fachen bis 2,5 fachen, insbesondere etwa dem doppelten, Querschnitt des Zulaufs entspricht.

3. Verwendung nach Anspruch 1 oder 2,
**dadurch gekennzeichnet, dass** die Innenfläche der Filterwand mit einem spanabhebenden Verfahren bearbeitet und daher nahtlos ist, wobei die Öffnungen durch einen Bohrprozess, insbesondere mechanisch oder mit Laserstrahlung, in die Filterwand eingebracht sind.

4. Verwendung nach Anspruch 1 ,
**dadurch gekennzeichnet, dass** das Kernelement (30) mit einem Antrieb ausgestattet ist, der ein Drehen des Kernelementes in Vorwärts- und Rückwärtsrichtung ermöglicht, wobei die Drehzahl in Abhängigkeit einer Druckdifferenz, insbesondere der Druckdifferenz zwischen Zulauf (16) und Ablauf (20), einstellbar ist.

5. Verwendung nach einem der vorherigen Ansprüche,
**dadurch gekennzeichnet, dass** das Kernelement (30) von einem vorzugsweise aus Kunststoff gefertigten Zylinder gebildet ist, dessen Wandung Schaberlamellen (38) trägt, wobei die Schaberlamellen (38) mit einer schabenden Außenkante die Innenwand beaufschlagen.

6. Verwendung nach Anspruch 5,
**dadurch gekennzeichnet, dass** die Schaberlamellen (38) im Winkel gegen die Umfangsrichtung in der Wandung gehalten sind, wobei die Schaberlamellen (38) zur Halterung in einem in die Wandung eingebrachten Schlitz (2) schwimmend gehalten sind.

7. Verwendung nach Anspruch 6,
**dadurch gekennzeichnet, dass** in dem Kernelement (30) ein Spülkanal (3) zur Durchführung von Spülflüssigkeit vorgesehen ist, wobei der Spülkanal (3) abzweigende Ausflusskanäle (4) aufweist, die jeweils in dem Schlitz (2) münden.

8. Verwendung nach Anspruch 7,
**dadurch gekennzeichnet, dass** die Ausflusskanäle (4) einen rechteckigen Querschnitt haben, der in seiner Breite der Breite des Schlitzes (2) entspricht.

9. Verfahren zur Verarbeitung pastöser Lebensmittel, insbesondere zur Schmelzkäseherstellung, bei welchem ein Lebensmittel-Produkt, mittels eines ein geschlossenes Gehäuse (12) aufweisenden Filters filtriert wird, wobei das zu filtrierende Lebensmittel-Produkt über einen Zulauf (16) zugeführt wird, und wobei das filtrierte Lebensmittel-Produkt über einen Ablauf (20) abgeführt wird, und wobei ein abgefilterter Rückstand durch einen Ausgang ausgelassen wird, wobei eine zylindrische Filterwand eines zwischen Zulauf (16) und Ablauf (20) angeordneten Filtereinsatzes (14) in radialer Richtung von innen nach außen von dem Lebensmittel-Produkt durchströmt wird,
**dadurch gekennzeichnet,**
**dass** ein im Filtereinsatz (14) koaxial angeordnetes Kernelement (30) gedreht wird, wobei ein zwischen dem Kernelement (14) und der Filterwand ausgebildeter, definierter Ringraum (36) konstant von dem Lebensmittel-Produkt durchflossen wird, und wobei mindestens ein am Außenumfang des Kernelementes (30) angeordneter Schaber (38) zum Abführen des Rückstandes an der Innenfläche der Filterwand schabt.

## Claims

1. Use of a filter for processing paste-like foodstuffs, in particular for producing processed cheese, wherein the filter has a closed housing (12) having an inlet (16) for food products to be filtered, an outlet (20) for the filtered food product, an outlet for the residue filtered off and a filter insert (14), which is arranged between the inlet (16) and the outlet (20) and has a cylindrical filter wall, through which the food product flows in the radial direction from the inside to the outside, wherein the filter is **characterised in that** a rotatable core element (30) is arranged coaxially in the filter insert (14), wherein a defined annular space (36) is formed between the core element (14) and the filter wall, wherein the core element (30) is dimensioned in such a manner that the annular space (36) produced allows a constant flow of the food product, wherein at least one doctor (38) is arranged on the outer contour of the core element (30), which scrapes against the inner face of the filter wall when the core element (30) rotates in order to remove the residue.

2. The use according to Claim 1,
**characterised in that**
the filter insert (14) has openings having an aperture size of between 10 and 400 micrometres, wherein the total area formed by the openings corresponds to 1.5 to 2.5 times, in particular twice, the cross section of the inlet.

3. The use according to Claim 1 or 2,
**characterised in that**
the inner face of the filter wall is machined using a cutting method and is therefore seamless, wherein the openings are introduced into the filter wall using a drilling process, in particular mechanically or with laser radiation.

4. The use according to Claim 1,
**characterised in that**
the core element (30) is equipped with a drive, which allows rotation of the core element in the forward and rearward directions, wherein the rotation speed can be set as a function of a pressure difference, in particular the pressure difference between the inlet (16) and the outlet (20).

5. The use according to one of the preceding claims,
**characterised in that**
the core element (30) is formed by a cylinder, which is preferably produced from plastic, the walls of which caries doctor blades (38), wherein the doctor blades(38) charges the inner surface with a scraping outer edge.

6. The use according to Claim 5,
**characterised in that**
the doctor blades (38) are held in the walls at an angle to the circumferential direction, wherein the doctor blades (38) are held in a floating manner in a slot (2) introduced into the walls for retention.

7. The use according to Claim 6,
**characterised in that**
a flushing channel (3) for conducting flushing liquid is provided in the core element (30), wherein the flushing channel (3) has outflow channels (4) which each open into the slit (2).

8. The use according to Claim 7,
**characterised in that**
the outflow channels (4) have a rectangular cross section, which width corresponds to the width of the slit (2).

9. A method for processing paste-like foodstuffs, in particular for producing processed cheese, in which a food product is filtered by means of a filter having a closed housing (12), wherein the food product to be filtered is fed via an inlet (16), and wherein the filtered food product is discharged via an outlet (20), and wherein a residue filtered off is let out via an outlet, wherein the food product flows through a cylindrical filter wall of a filter insert (14) arranged between the inlet (16) and outlet (20) in the radial direction from the inside to the outside,
**characterised in that**
a core element (30) arranged coaxially in the filter insert (14) is rotated, wherein the food product flows constantly through a defined annular space (36) formed between the core element (14) and the filter wall, and wherein at least one doctor (38) arranged on the outer circumference of the core element (30) scrapes against the inner face of the filter wall in order to remove the residue.

## Revendications

1. Utilisation d'un filtre pour le traitement de produits alimentaires pâteux, en particulier pour la préparation de fromages à tartiner, le filtre présentant un boîtier fermé (12) avec une entrée (16) pour des produits alimentaires à filtrer, une sortie (20) pour le produit alimentaire filtré, une évacuation pour le résidu éliminé par filtrage et un insert de filtre (14) disposé entre l'entrée (16) et la sortie (20), avec une paroi de filtre cylindrique qui est parcourue de l'intérieur vers l'extérieur dans la direction radiale par le produit alimentaire, le filtre étant **caractérisé en ce qu'**un élément de noyau rotatif (30) est disposé coaxialement dans l'insert de filtre (14), un espace annulaire défini (36) étant réalisé entre l'élément de noyau (30) et la paroi de filtre, l'élément de noyau (30) étant dimensionné de telle sorte que l'espace annulaire produit (36) permette un flux constant du produit alimentaire, au moins un racloir (38) étant disposé sur la périphérie extérieure de l'élément de noyau (30), lequel racloir agit en raclant contre la surface intérieure de la paroi de filtre lorsque l'élément de noyau (30) tourne afin d'évacuer le résidu.

2. Utilisation selon la revendication 1,
**caractérisée en ce que** l'insert de filtre (14) présente des ouvertures ayant une largeur de maille comprise entre 10 et 400 microns, la surface totale formée par les ouvertures correspondant à de 1,5 fois à 2,5 fois, en particulier approximativement à deux fois la section transversale de l'entrée.

3. Utilisation selon la revendication 1 ou 2, **caractérisée en ce que** la surface intérieure de la paroi de filtre est traitée avec un procédé par enlèvement de copeaux et ne présente donc pas de joint, les ouvertures étant pratiquées par un processus de perçage, en particulier mécaniquement ou par un faisceau laser, dans la paroi de filtre.

4. Utilisation selon la revendication 1,
**caractérisée en ce que** l'élément de noyau (30) est muni d'un entraînement qui permet une rotation de l'élément de noyau dans la direction vers l'avant et vers l'arrière, la vitesse de rotation pouvant être ajustée en fonction d'une différence de pression, en particulier de la différence de pression entre l'entrée (16) et la sortie (20).

5. Utilisation selon l'une quelconque des revendications précédentes,
**caractérisée en ce que** l'élément de noyau (30) est formé par un cylindre fabriqué de préférence en plastique, dont la paroi porte des lamelles de racloir (38), les lamelles de racloir (38) sollicitant la paroi intérieure avec une arête extérieure de raclage.

6. Utilisation selon la revendication 5,
**caractérisée en ce que** les lamelles de racloir (38) sont maintenues dans la paroi suivant un certain angle par rapport à la direction périphérique, les lamelles de racloir (38) étant maintenues de manière flottante en vue de leur fixation dans une fente (2) pratiquée dans la paroi.

7. Utilisation selon la revendication 6,
**caractérisée en ce qu'**un canal de rinçage (3) est prévu pour le passage de liquide de rinçage dans l'élément de noyau (30), le canal de rinçage (3) présentant des canaux de sortie (4) bifurquant, qui débouchent à chaque fois dans la fente (2).

8. Utilisation selon la revendication 7,
**caractérisée en ce que** les canaux de sortie (4) présentent une section transversale rectangulaire dont la largeur correspond à la largeur de la fente (2).

9. Procédé de traitement de produits alimentaires pâteux, en particulier pour la préparation de fromages à tartiner, dans lequel un produit alimentaire est filtré au moyen d'un filtre présentant un boîtier fermé (12), le produit alimentaire à filtrer étant acheminé par le biais d'une entrée (16) et le produit alimentaire filtré étant évacué par le biais d'une sortie (20), et un résidu évacué par filtrage étant éliminé par une évacuation, une paroi de filtre cylindrique d'un insert de filtre (14) disposé entre l'entrée (16) et la sortie (20) étant traversée dans la direction radiale de l'intérieur vers l'extérieur par le produit alimentaire,
**caractérisé en ce**
**qu'**un élément de noyau (30) disposé coaxialement dans l'insert de filtre (14) est tourné, un espace annulaire défini (36) réalisé entre l'élément de noyau (30) et la paroi de filtre étant parcouru de manière constante par le produit alimentaire, et au moins un racloir (38) disposé sur la périphérie extérieure de l'élément de noyau (30) agissant en raclant contre la surface intérieure de la paroi de filtre afin d'évacuer le résidu.
